# EUROPEAN PATENT APPLICATION

(11) **EP 4 383 203 A1**
(43) Date of publication of application: **12.06.2024**
(21) Application number: 22290068.0
(22) Date of filing: 09.12.2022
(51) Int. Cl.: G06T 15/08

(54) **DEVICE AND METHOD FOR GENERATING A VISUALIZATION OF AN ANATOMICAL VOLUME OF INTEREST**

(71) Applicant: Koninklijke Philips N.V., 5656 AG Eindhoven (NL)
(72) Inventor: Wiemker, Rafael, 5656 AG Eindhoven (NL); Bontus, Claas, 5656 AG Eindhoven (NL); Vlachomitrou, Anna Sesilia, 5656 AG Eindhoven (NL); Nickisch, Hannes, 5656 AG Eindhoven (NL); Brosch, Tom, 5656 AG Eindhoven (NL); Peters, Jochen, 5656 AG Eindhoven (NL); Weese, Rolf Jürgen, 5656 AG Eindhoven (NL); Matute Flores, Jose Alejandro, 5656 AG Eindhoven (NL)
(74) Representative: Philips Intellectual Property & Standards

(57) **Abstract**

The present invention relates to a device (3) and a method for generating a visualization of an anatomical volume of interest. The device comprises circuitry (32) configured to segment the volume of interest in a 3D image data set; decompose the segmented volume of interest into a hypo-enhancement volume and a hyper-enhancement volume, each showing the shell area of the volume of interest, wherein the hypo-enhancement volume is generated by thresholding voxels of the shell area against a first threshold and the hyper-enhancement volume is generated by thresholding voxels of the shell area against a second threshold; generate an inner volume showing only the inner area of the volume of interest without the shell area; and generate a composition volume by composing the hypo-enhancement volume, the hyper-enhancement volume and the inner volume.

## Description

### FIELD OF THE INVENTION

The present invention relates to a device and a method for generating a visualization of an anatomical volume of interest.

### BACKGROUND OF THE INVENTION

Myocarditis (recently also proven as a side effect of certain COVID vaccines) can be diagnosed by virtue of Late Enhancement (LE) patterns remaining after wash-out of contrast agents on e.g. CT and MR images. Moreover, spectral CT and MR are known to have a much higher sensitivity to subtle contrast agent concentration than conventional CT. However, even with those imaging modalities, standard 3D projection renderings do not provide a sufficiently clear and detailed visualization that allows a diagnosis of diseases like myocarditis, coronary artery disease, myocardial viability, cardiomyopathy, other infiltrative myocardial processes and/or other cardiac perfusion defects.

### SUMMARY OF THE INVENTION

It is an object of the present invention to provide a device and a method for generating an improved visualization of an anatomical volume of interest.

In a first aspect of the present invention a device for generating a visualization of an anatomical volume of interest is presented, the device comprising circuitry configured to:
- segment the volume of interest in a 3D image data set;
- decompose the segmented volume of interest into a hypo-enhancement volume and a hyper-enhancement volume, each showing the shell area of the volume of interest, wherein the hypo-enhancement volume is generated by thresholding voxels of the shell area against a first threshold and the hyper-enhancement volume is generated by thresholding voxels of the shell area against a second threshold;
- generate an inner volume showing only the inner area of the volume of interest without the shell area; and
- generate a composition volume by composing the hypo-enhancement volume, the hyper-enhancement volume and the inner volume.

In a further aspect of the present invention a corresponding method is presented.

In yet further aspects of the present invention, there are provided a computer program which comprises program code means for causing a computer to perform the steps of the method disclosed herein when said computer program is carried out on a computer as well as a non-transitory computer-readable recording medium that stores therein a computer program product, which, when executed by a processor, causes the method disclosed herein to be performed.

Preferred embodiments of the invention are defined in the dependent claims. It shall be understood that the claimed method, computer program and medium have similar and/or identical preferred embodiments as the claimed device, in particular as defined in the dependent claims and as disclosed herein.

The present invention is based on the recognition that in the LE phase the contrast agent is almost completely washed out, and thus the remaining hyper- and hypo-enhancements are very subtle. Diagnosis of myocarditis and cardiac perfusion defects depends not only on LE magnitude but also on the distribution pattern, such as diffuse, patchy, transmural, focal, layered, etc. The device and method according to the present invention ensure that an observer (e.g. a clinician or radiologist) is enabled to partly see through the segmented volume of interest, e.g. through the myocardial wall, for appraisal of transmuralities (unlike standard surface renderings) on the one hand, but does not see a confusing mixture of proximal and distal surfaces, e.g. a confusing mixture of the proximal and distal myocardial wall on the other hand, as would be the result of standard 3D projection renderings.

The present invention thus presents a way how to generate such a visualization that helps an observer to identify any potential disease and to make a diagnosis. A specific visualization of regions of interest, e.g. of cardiac regions, is thus computed and generated based on an automated decomposition into at least three separate volumes with different optical rendering properties and re-compositing them into an interactively steerable 3D rendering. This visualization allows subtle hypo- and hyper-enhancing transmurality patterns to be appraised without confounding superpositions of proximal and distal features.

According to a preferred embodiment the circuitry is configured to generate the composition volume by rendering the hypo-enhancement volume, the hyper-enhancement volume and the inner volume into the composition volume, wherein the hypo-enhancement volume and the hyper-enhancement volume are rendered with translucency and the inner volume is rendered with opacity. This provides the desired effect that a confusing mixture of proximal and distal surfaces is avoided.

A preferred way to generate the composition volume is by use of ray tracing, wherein a ray hitting a voxel that shall be rendered with opacity is interrupted. This ensures that voxels arranged along the further extension of the interrupted ray are not taken into account for the visualization of the pixel in the composition image representing the voxels along this ray. The desired opacity can thus be achieved.

According to another embodiment the circuitry is configured to assign a first image value, in particular a first color, to the voxels of the hypo-enhancement volume; assign a second image value, in particular a second color, to the voxels of the hyper-enhancement volume; assign a third image value, in particular a third color, to the voxels of the inner volume; and render the hypo-enhancement volume, the hyper-enhancement volume and the inner volume with their assigned image values into the composition volume. This further improves the visualization of the segmented volume of interest and enables a better recognition of areas with hypo-enhancement and hyper-enhancement.

The circuitry may further be configured to generate overlay images from the 3D image data set and to use the image values assigned to voxels of the different volumes as image values of the corresponding pixels of the overlay images. For instance, color maps as used for a 3D rendering can be used for generating complementing color overlays on a standard 2D slice view port. These overlays may be effective only at the region of interest (e.g. the myocardial wall) and fully transparent otherwise.

According to another embodiment the circuitry is configured to generate a structure volume including the inner volume and one or more surrounding structures connected with the inner volume and leading through the shell area; and generate the composition volume by composing the hypo-enhancement volume, the hyper-enhancement volume, the inner volume and the structure volume. Preferably, the structure volume is rendered with translucency in the step of generating the composition volume. The use of the structure volume further improves the visualization and further helps the observer to make a diagnosis.

The circuitry may be configured to use a single common threshold as the first and second thresholds for decomposing the segmented volume of interest. Various options exist how to obtain and what to use as single common threshold. For instance, one of the following may be used as single common threshold:
- a mean value, a median value, a quartile value, a quantile value or a multiple thereof of any one of i) voxels of only the shell area, ii) the shell area and one or more surrounding structures connected with the inner volume and leading through the shell area, iii) the complete volume of interest, and iv) another remote shell of another volume of interest;
- a value not taken from the 3D image data set but from another medical measurement, in particular a measurement of any one of weight, hematocrit value, and blood pressure; and
- a predetermined value.

The other remote shell of another volume of interest may be a shell that is physiologically meaningful, such the shell of the aorta, the vena cava, etc.

In an embodiment the circuitry is configured to generate the hypo-enhancement volume by assigning a first value to voxels having an image value below the first threshold and by assigning a second value to voxels having an image value above the first threshold and to generate the hyper-enhancement volume by assigning a third value to voxels having an image value above the second threshold and by assigning a fourth value to voxels having an image value below the second threshold. For instance, a first binary value may be used as first and third values and a second binary value may be used as second and fourth values. Alternatively, different color values may be used as first and third values. These embodiments contribute to further improve the generation of an intuitive visualization.

The circuitry may further be configured to generate the inner volume by segmenting an object in the inner area of the volume of interest. Hereby, a fifth value may be assigned to the voxels of the inner volume, in particular a fifth value that lets the inner volume appear opaque when displayed. For the segmentation of this inner area (and of other volumes as segmented according to embodiments of the present invention), different options exist that may be used, for instance various representations (e.g. voxelwise labeling vs contour descriptions such triangle meshes) and various methods to achieve the segmentation, e.g. model adaptation, convolutional neural networks, etc.

In another embodiment, the circuitry is configured to register the composition volume with the 3D image data set and/or slice images of the 3D image data set. This enables an interactive interrogation between the composition volume and the 3D image data set and/or slice images.

The present invention may be used with different image modalities and different organs or other volumes of interest. For instance, an MR, X-ray, CT or ultrasound image data set may be used as 3D image data set. Further, a tumor or organ, in particular a ventricle of the heart, a breast, the brain, the liver, or a kidney, may be segmented from the 3D image data set. One exemplary use may be the generation of a visualization appropriate for use of myocarditis or other cardiac perfusion defects.

The device according to the present invention may for instance be used in a system comprising, in addition to the device, an imaging device (e.g. an MR, CT, spectral CT, ultrasound, PET or X-ray scanning device) for acquiring a 3D image data set and a display (e.g. a monitor or screen of a PC or workstation) for displaying the generated visualization.

### BRIEF DESCRIPTION OF THE DRAWINGS

These and other aspects of the invention will be apparent from and elucidated with reference to the embodiment(s) described hereinafter. In the following drawings
Fig. 1 shows a schematic diagram of an embodiment of a system according to the present invention,
Fig. 2 shows a schematic diagram of an embodiment of a device according to the present invention,
Fig. 3 shows a schematic diagram of a first embodiment of a method according to the present invention,
Fig. 4 shows a schematic diagram of a second embodiment of a method according to the present invention,
Fig. 5 shows images of different volumes used according to the present invention, and
Fig. 6 shows further images used according to the present invention.

### DETAILED DESCRIPTION OF EMBODIMENTS

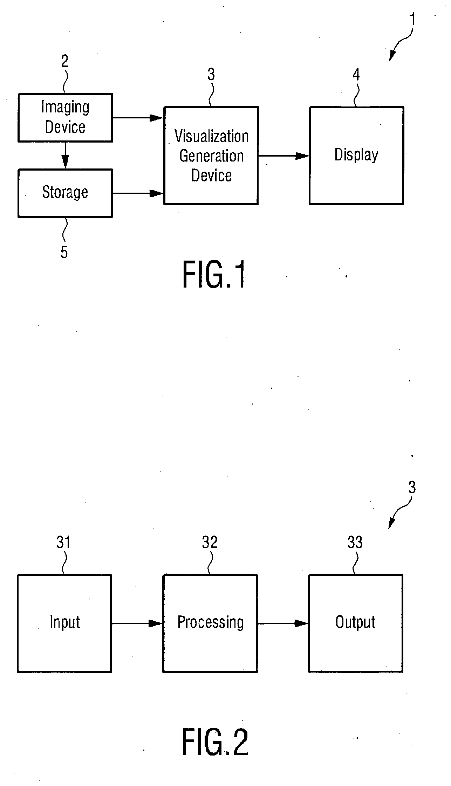

Fig. 1 shows a schematic diagram of an embodiment of a system 1 for generating a visualization of an anatomical volume of interest according to the present invention. The system 1 comprises an imaging device 2 for acquiring a 3D image data set, a device 3 for generating the visualization from the acquired 3D image data set, and a display 4 for displaying the generated visualization.

The imaging device 2 may e.g. be an MR, CT, spectral CT, PET, ultrasound or X-ray scanning device as conventionally used for acquiring image data of a subject, e.g. of a certain body region of a patient. The device 3 may e.g. be implemented as or in a processor or computer, in software and/or hardware. For instance, a programmed processor may be included in the device 3, which may execute a computer program that may be stored in a memory that is accessed by the processor. The display 4 may e.g. be a monitor or screen of a PC or workstation, e.g. of a computer that represents the device 3 and is carrying out the method for generating a visualization of an anatomical volume of interest according to the present invention.

The device 3 may directly obtain (i.e. retrieve or receive) the 3D image data set directly from the imaging device 2 or from storage 5, such as a buffer or memory or image repository, e.g. a patient record stored in a hospital's document management system, e.g. via a wired or wireless network.

Fig. 2 shows a schematic diagram of an embodiment of a device 3 for generating a visualization of an anatomical volume of interest according to the present invention. The device may comprise circuitry, e.g. a processor, processing circuitry, a computer, dedicated hardware, etc. that carries out the functions of the device. In another embodiment, as shown in Fig. 2, separate units or elements may be used that together represent the circuitry.

In this embodiment the device 3 comprises an input unit 31 configured to obtain a 3D image data set, e.g. from the imaging device 2 or the storage 5. For this purpose the input unit 31 may be directly or indirectly (e.g. via a network or bus) coupled or connected to the imaging device 2 or the storage 5. The input unit may thus e.g. be a (wired or wireless) communication interface or data interface, such as a Bluetooth interface, Wi-Fi interface, LAN interface, HDMI interface, direct cable connection, or any other suitable interface allowing data transfer to the device 2.

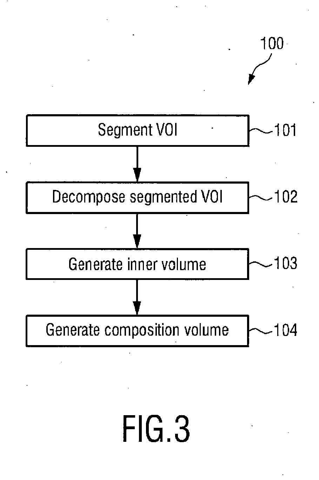

The device 3 further comprises a processing unit 32 configured to carry out the steps of the method according to the present invention as explained below with reference to Fig. 3. The processing unit 32 may be any kind of means configured to process the obtained 3D image data set and to generate a visualization of an anatomical volume of interest there from. It may be implemented in software and/or hardware, e.g. as a programmed processor, computer, laptop, PC, workstation, etc.

The device 3 further comprises an output 33 configured to output the generated visualization. The output 33 may generally be any interface that provides the generated visualization, e.g. transmits it to another device or provides it for retrieval by another device, e.g. transmits it to another computer or transfers it directly to the display 4 for displaying it. It may thus generally be any (wired or wireless) communication or data interface.

Fig. 3 shows a flow chart of a first embodiment of a method 100 for generating a visualization of an anatomical volume of interest according to the present invention. The steps of the method may be carried out by the device 3, wherein the main steps of the method are carried out by the processing unit 32. The method may e.g. be implemented as computer program running on a computer or processor.

In a first step 101, the volume of interest (VOI) in a 3D image data set is segmented. For this purpose, generally any available segmentation algorithm may be used. For instance, an organ shape model or machine learning model, e.g. a mesh or volumetric label representation, may be applied. The volume of interest may be a tumor or an organ, for instance a ventricle of the heart, a breast, the brain, the liver, or a kidney.

In a second step 102, the segmented volume of interest is decomposed into different volumes, in particular into a hypo-enhancement volume and a hyper-enhancement volume. Each of these two volumes shows the shell area of the volume of interest, but the hypo-enhancement volume is generated by thresholding voxels of the shell area against a first threshold and the hyper-enhancement volume is generated by thresholding voxels of the shell area against a second threshold. Hereby, both the first and second threshold may be different thresholds or a common threshold.

In a third step 103, an inner volume is generated that shows only the inner area of the volume of interest without the shell area. This may be done by segmenting an object in the inner area of the volume of interest, for instance a ventricle or the core of a tumor.

In a fourth step 104, a composition volume is generated by composing the hypo-enhancement volume, the hyper-enhancement volume and the inner volume. This may be done by rendering the hypo-enhancement volume, the hyper-enhancement volume and the inner volume into the composition volume, wherein the hypo-enhancement volume and the hyper-enhancement volume are rendered with translucency and the inner volume is rendered with opacity. In this way the desired visual effect is achieved that the user can partly see through the segmented volume of interest, for appraisal of transmuralities and does not see a confusing mixture of proximal and distal surfaces of the volume of interest.

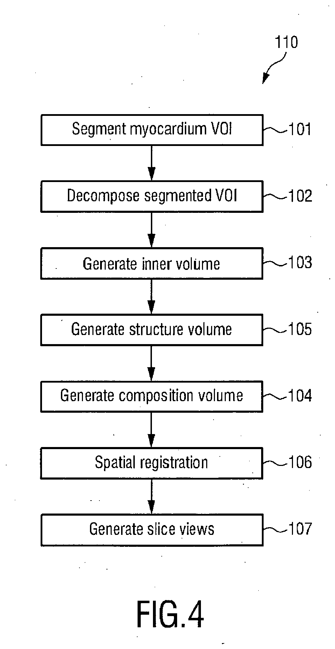

It shall noted that the different volumes (hypo- and hyper-enhancement volumes, inner volume) are generated from the same image volume (3D image data set) and thus from the same time point, i.e., they all show the volume of interest or parts thereof at the same moment in time. However, the present invention can be applied to various image volumes (3D image data sets) of different time points (i.e., acquired at different moments in time). For instance, 3D image data sets may be acquired multiple times, e.g. before, at the beginning, during, at the end of and after the administration of a contrast agent to visualize how the contrast agent is washed-in and washed-out. Thus, individual thresholds (e.g. different median values) may be computed and used for the generation of the hypo- and hyper-enhancement volumes at the different moments in time, which thresholds may be identical or different, i.e., at each moment in time a separate threshold may be computed. In other embodiment, a common threshold may be used for all moments in time. Thus, although the method illustrated in Figs. 3 and 4 is described by reference to the processing of a 3D image data set at a single time point, the method of the present invention is suitable and can be used to be applied to two or more 3D image data sets at to or more time points, i.e., the method illustrated in Figs. 3 and 4 may be repeated multiple times for different time points to generate different visualizations of the same anatomical volume of interest and its behavior over time (e.g. its perfusion over time).

The inner area is a cavity which is generally not of interest and enclosed by the region of interest, such as the cardiac ventricle holding the blood fluid and being surrounded by the cardiac muscle (myocardium). Although the inner area is generally not of interest, it should occlude the area of interest "behind" it in order to prevent superposition of different parts of the region of interest and a confusing mixture of proximal and distal surfaces in the visualization. The identification and delineation (segmentation) of the inner area may be done in the same way as the segmentation of the anatomy of interest, e.g. by using a geometric model adaptation, region growing, or deeply layered convolutional neural networks.

Fig. 4 shows a flow chart of a second embodiment of a method 110 for generating a visualization according to the present invention. This embodiment will be illustrated by reference to an exemplary application used to visualize the myocardium, e.g. of the left ventricle. This visualization is useful in order to check if there are any cardiac perfusion defects or if the subject suffers from myocarditis. It is known that disorders of perfusion (hypo-perfusion and/or hyper-perfusion) may particularly be visible in the early phase (wash-in phase) of contrast agent if there are dark areas within the image regions representing the myocardium indicating a too slow or too low washing-in of the contrast agent and in the late phase (wash-out phase) of contrast agent if there light areas within the image regions representing the myocardium indicating a too slow or too low washing-out of the contrast agent. The present invention helps to generate a visualization that visualizes such disorders.

In such an exemplary application, initially the myocardium volume of interest is segmented (step 101) and then decomposed into a hypo- and a hyper-enhancement volume, below and above the median value of the myocardium, respectively (step 102). Both volumes are then positively signed (with different meanings) which is advantageous for the subsequent rendering and composition steps.

An inner volume is generated in step 103 from the myocardium volume signifying only the inner left ventricle or the endocardial layer.

Optionally, a further volume (called structure volume herein) is generated from the myocardium volume in step 105, which includes the inner volume and one or more surrounding structures connected with the inner volume and leading through the shell area. This structure volume e.g. signifies the epicardium and surrounding structures (e.g. atrium and/or ascending aorta).

Spectral CT (and MR) scanners provide a choice of various spectral derivative images (e.g. so-called virtual mono energy images or contrast density images for CT), with specific advantageous characteristics. Each of these image volumes is suitable and may be used as individual input (i.e. as 3D image data set) to the device and method according to the present invention. The decomposition into a hypo-enhancement volume and a hyper-enhancement volume in step 102 may utilize an advanced sensitivity of such spectral derivative image volumes (e.g. IodineDensityMap, virtual mono energy images of low keV, etc.). The present invention thus shows hypo- and hyper-intensity regions adapted automatically to the image-specific characteristics.

In step 104 the three (or optionally four) volumes are composed into a rotatable Mean-Projection Rendering with a 'glassy' translucency out of three component volumes (structure volume and hypo- and hyper-enhancement volumes), and a full opacity of the inner (e.g. endocardial) volume, using specific color maps and opacity transfer functions. For instance, the hypo-enhancement volume may be rendered bluish, the hyper-enhancement volume may be rendered reddish, the inner volume may be rendered in black as opaque barrier, and the surrounding structures (e.g. aorta, bulbus, etc.) may be rendered whitish for orientation. The rotatable Mean-Projection Rendering (composition volume) and optionally the three / four volumes used for generating this composition volume may be displayed on a display.

In a further optional step 106, interactive navigation to salient locations may be enabled by spatially registering the volume rendering to the original volumetric 3D coordinates in such a way, that the interactive interrogation (e.g. through a mouse-click or touch on a touchpad) leads to the corresponding location in standard intersectional representations (e.g. slice views) for further inspection, thus allowing intuitive navigation to salient locations of interest.

In a still further optional step 107 a corresponding display on trans-sectional slice views may be generated and provided. The same color maps as for the 3D rendering may be used for generating complementing color overlays on the standard 2D slice view ports. These overlays may be effective only at the region of interest (e.g. the myocardial wall) and fully transparent otherwise.

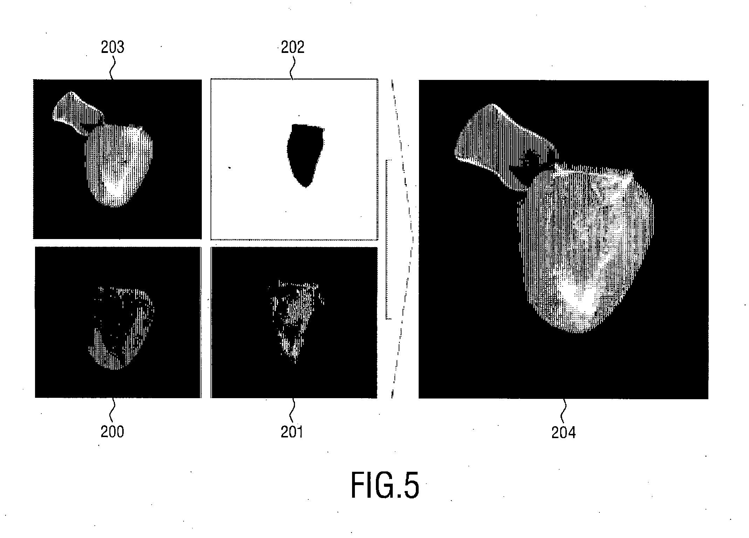

Fig. 5 shows different images as used and generated according to the embodiment of the method 110 explained above, in particular of an illustration of decomposition into four separate volumes and the composition into a rendering.

Image 200 is a visualization of the hypo-enhancement volume, which may be translucent and rendered in blue. Image 201 is a visualization of the hyper-enhancement volume of voxels above median (or other threshold) of myocardial wall, which may be translucent and rendered in red. Image 202 is a visualization of the inner volume, in this example of the opaque left ventricle or endocardial layer, which may be rendered in black. Image 203 is a visualization of the structure volume, in this example of the translucent ascending aorta and the left ventricle for spatial orientation, which may be translucent and rendered in white. Image 204 is a visualization of the composition volume.

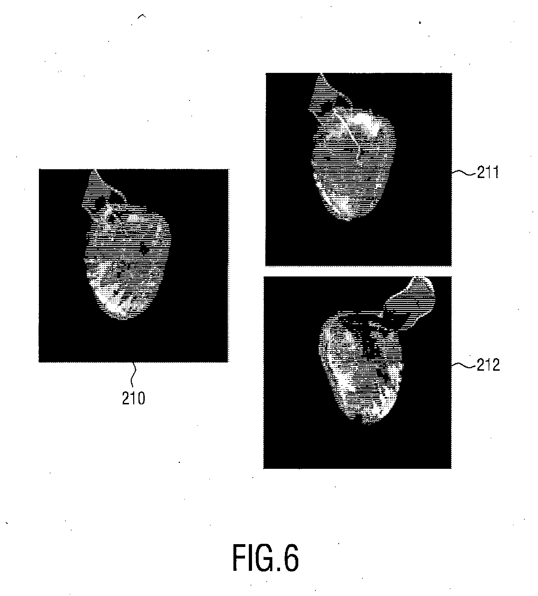

Fig. 6 shows an illustration of the advantages to provide an opaque endocardium. Image 210 is a fully translucent image, resulting in a confounding superposition of proximal and distal structures. Images 211 and 212 show a backside view and a frontside view, rendered with an opaque endocardium (inner ventricle).

The present invention may be used with different imaging modalities and different organs or tumors. An exemplary embodiment has been described and illustrated above with respect to conventional or spectral CT or MR on cardiac scans. However, it is applicable in an analogous fashion to other spectral modalities and/or organs or tumors with perfusion-specific volumes of interest (breast, brain, liver, kidneys, etc.).

Further, the present invention provides an efficient representation for GPU-based rendering. With respect to the interactive rendering performance, it may be of particular efficiency to load the three or four volumes with 8-bit quantification, respectively, as color channels into the standardized 32-bit-ARGB (Alpha (transparency) Red Green Blue) textures typically processed by GPUs.

The threshold(s) described above for generating the hypo-enhancement volume and a hyper-enhancement volume can be automatically determined, e.g. by the mean value of the myocardial wall, or a histogram analysis yielding the median or modal value, leading to an automatic balancing of hypo- vs hyper-enhancing areas. Alternatively, fixed level and window settings can be applied as "presets".

Generally, there are different options for generating the one or more thresholds. One option is a value not taken from the 3D image data set but from another medical measurement, in particular a measurement of any one of weight, hematocrit value, and blood pressure. Clinical parameters such as body weight, blood hematocrit value, and blood pressure, contrast injection flow. Each of them has an influence on the contrast agent concentration in the blood at a given time point. Using either experience by virtue of recorded values from earlier cases, or a biophysical model, an appropriate threshold can be computed (as an alternative to the statistical method such as median of image intensities) from one or more of these clinical parameters.

Other options for generating the one or more thresholds are a mean value, a median value, a quartile value, a quantile value or a multiple thereof of any one of i) voxels of only the shell area, ii) the shell area and one or more surrounding structures connected with the inner volume and leading through the shell area, iii) the complete volume of interest, and iv) another remote shell of another volume of interest (e.g. a shell that is physiologically meaningful, such the shell of the aorta, the vena cava). In the example of application of the invention for generating a visualization that allows a diagnosis of e.g. myocarditis, a remote shell may e.g. be another location where the contrast concentration can be measured safely and easily, and through which the blood must flow on its way to or from the heart. The contrast concentration there is therefore causally related to the contrast concentration in the myocardium. Using either experience by virtue of recorded values from earlier cases, or a biophysical model, an appropriate threshold for the myocardium can be derived from the remote location.

For the rendering ray tracing along a given view ray may be applied in an embodiment. The translucency effect can be achieved using a simple mean-norm. Optionally, higher weight can be given to outliers (approaching a maximum intensity projection) by using ap-Norm: v = (Σ v^{p} / N )^{1/p}, e.g. with p = 2 (corresponding to a root-mean-square norm). A maximum intensity projection and/or a minimum intensity projection may thus be used to emphasize given disorders of perfusion in the visualization, which may thus be visually highlighted, or areas without disorders may not be taken into account at all or less emphasized in the visualization.

According to other embodiments the colors or image values used in the rendering of the different volumes, in particular of the hypo-enhancement volume and the hyper-enhancement volume, may be applied such that only voxels having a certain distance from the respective threshold (e.g. a median) are assigned the respective color or image value. Further, in an embodiment the intensity of a color or image value assigned to a voxel may depend on its "distance" from the respective threshold (i.e. the difference of its voxel value from the threshold value) so that the color or image value may be linearly increased and decreased rather than assigning only a binary value to each voxel.

In another embodiment outliers among the voxels may be filtered out and ignored before rendering the different volumes. According to further options, weighting may be applied according to which neighboring voxels having the same or similar voxel values may be weighted stronger than isolated voxels.

The invention may be used with imaging workstations and Picture Archiving and Communication System (PACS) viewers dedicated to appraisal to organ-specific (e.g. cardiac-specific) contrast agent concentration and distribution.

In summary, the present invention provides a specific visualization of regions of interest based on automated decomposition into three or four separate volumes with different optical rendering properties and decomposition of them into 3D rendering, which may optionally be interactively steerable. The proposed device and method allow subtle hypo- and hyper-enhancing transmurality patterns to be appraised without confounding superpositions of proximal and distal features.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality. A single element or other unit may fulfill the functions of several items recited in the claims. The mere fact that certain measures are recited in mutually different dependent claims does not indicate that a combination of these measures cannot be used to advantage.

A computer program may be stored/distributed on a suitable non-transitory medium, such as an optical storage medium or a solid-state medium supplied together with or as part of other hardware, but may also be distributed in other forms, such as via the Internet or other wired or wireless telecommunication systems.

The elements of the disclosed devices, apparatus and systems may be implemented by corresponding hardware and/or software elements, for instance appropriate circuits or circuitry. A circuit is a structural assemblage of electronic components including conventional circuit elements, integrated circuits including application specific integrated circuits, standard integrated circuits, application specific standard products, and field programmable gate arrays. Further, a circuit includes central processing units, graphics processing units, and microprocessors which are programmed or configured according to software code. A circuit does not include pure software, although a circuit includes the above-described hardware executing software. A circuit or circuitry may be implemented by a single device or unit or multiple devices or units, or chipset(s), or processor(s).

Any reference signs in the claims should not be construed as limiting the scope.

## Claims

1. Device (3) for generating a visualization of an anatomical volume of interest, the device comprising circuitry (32) configured to:
- segment the volume of interest in a 3D image data set;
- decompose the segmented volume of interest into a hypo-enhancement volume and a hyper-enhancement volume, each showing the shell area of the volume of interest, wherein the hypo-enhancement volume is generated by thresholding voxels of the shell area against a first threshold and the hyper-enhancement volume is generated by thresholding voxels of the shell area against a second threshold;
- generate an inner volume showing only the inner area of the volume of interest without the shell area; and
- generate a composition volume by composing the hypo-enhancement volume, the hyper-enhancement volume and the inner volume.

2. Device according to claim 1,
wherein the circuitry is configured to generate the composition volume by rendering the hypo-enhancement volume, the hyper-enhancement volume and the inner volume into the composition volume, wherein the hypo-enhancement volume and the hyper-enhancement volume are rendered with translucency and the inner volume is rendered with opacity and/or wherein the circuitry is configured to generate the composition volume by use of ray tracing, wherein a ray hitting a voxel that shall be rendered with opacity is interrupted.

3. Device according to claim 2,
wherein the circuitry is configured to
- assign a first image value, in particular a first color, to the voxels of the hypo-enhancement volume;
- assign a second image value, in particular a second color, to the voxels of the hyper-enhancement volume;
- assign a third image value, in particular a third color, to the voxels of the inner volume; and
- render the hypo-enhancement volume, the hyper-enhancement volume and the inner volume with their assigned image values into the composition volume.

4. Device according to claim 3,
wherein the circuitry is configured to generate overlay images from the 3D image data set and to use the image values assigned to voxels of the different volumes as image values of the corresponding pixels of the overlay images.

5. Device according to any one of the preceding claims,
wherein the circuitry is configured to
- generate a structure volume including the inner volume and one or more surrounding structures connected with the inner volume and leading through the shell area; and
- generate the composition volume by composing the hypo-enhancement volume, the hyper-enhancement volume, the inner volume and the structure volume.

6. Device according to claim 5,
wherein the circuitry is configured to render the structure volume with translucency in the step of generating the composition volume.

7. Device according to any one of the preceding claims,
wherein the circuitry is configured to use a single common threshold as the first and second thresholds for decomposing the segmented volume of interest, in particular to use, as single common threshold, one of:
- a mean value, a median value, a quartile value, a quantile value or a multiple thereof of any one of i) voxels of only the shell area, ii) the shell area and one or more surrounding structures connected with the inner volume and leading through the shell area, iii) the complete volume of interest, and iv) another remote shell of another volume of interest;
- a value not taken from the 3D image data set but from another medical measurement, in particular a measurement of any one of weight, hematocrit value, and blood pressure; and
- a predetermined value.

8. Device according to any one of the preceding claims,
wherein the circuitry is configured to generate the hypo-enhancement volume by assigning a first value to voxels having an image value below the first threshold and by assigning a second value to voxels having an image value above the first threshold and to generate the hyper-enhancement volume by assigning a third value to voxels having an image value above the second threshold and by assigning a fourth value to voxels having an image value below the second threshold.

9. Device according to claim 8,
wherein the circuitry is configured to use a first binary value as first and third values and the second binary value as second and fourth values or to use different color values as first and third values.

10. Device according to any one of the preceding claims,
wherein the circuitry is configured to generate the inner volume by segmenting an object in the inner area of the volume of interest.

11. Device according to claim 10,
wherein the circuitry is configured to assign a fifth value to the voxels of the inner volume, in particular a fifth value that lets the inner volume appear opaque when displayed.

12. Device according to any one of the preceding claims,
wherein the circuitry is configured to register the composition volume with the 3D image data set and/or slice images of the 3D image data set.

13. Device according to any one of the preceding claims,
wherein the circuitry is configured to use an MR, X-ray, CT or ultrasound image data set as 3D image data set and/or to segment a tumor or organ, in particular a ventricle of the heart, a breast, the brain, the liver, a kidney, from the 3D image data set.

14. Method for generating a visualization of an anatomical volume of interest, the method comprising:
- segmenting the volume of interest in a 3D image data set;
- decomposing the segmented volume of interest into a hypo-enhancement volume and a hyper-enhancement volume, each showing the shell area of the volume of interest, wherein the hypo-enhancement volume is generated by thresholding voxels of the shell area against a first threshold and the hyper-enhancement volume is generated by thresholding voxels of the shell area against a second threshold;
- generating an inner volume showing only the inner area of the volume of interest without the shell area; and
- generating a composition volume by composing the hypo-enhancement volume, the hyper-enhancement volume and the inner volume.

15. Computer program comprising program code means for causing a computer to carry out the steps of the method as claimed in claim 14 when said computer program is carried out on the computer.
